# EUROPEAN PATENT SPECIFICATION

(11) **EP 1 021 794 B1**
(45) Date of publication and mention of the grant of the patent: **13.09.2006**
(21) Application number: 98933349.7
(22) Date of filing: 15.07.1998
(51) Int. Cl.: G06T 1/00, H04N 1/00

(54) **A CAMERA WITH INTERNAL PRINTING SYSTEM**
FOTOGERÄT MIT INTERNEM AUSDRUCKSYSTEM
APPAREIL PHOTOGRAPHIQUE A SYSTEME D'IMPRESSION INTERNE

(30) Priority: 15.07.1997 AU PO800397; 15.07.1997 AU PO800597; 15.07.1997 AU PO803197; 15.07.1997 AU PO799197; 15.07.1997 AU PO799897; 15.07.1997 AU PO798897; 15.07.1997 AU PO799397; 15.07.1997 AU PO801297; 15.07.1997 AU PO801797; 15.07.1997 AU PO801497; 15.07.1997 AU PO802597; 15.07.1997 AU PO803297; 15.07.1997 AU PO799997; 15.07.1997 AU PO802497; 15.07.1997 AU PO801697; 15.07.1997 AU PO803097; 15.07.1997 AU PO793897; 15.07.1997 AU PO799797; 15.07.1997 AU PO797997; 15.07.1997 AU PO801597; 15.07.1997 AU PO797897; 15.07.1997 AU PO798297; 15.07.1997 AU PO798997; 15.07.1997 AU PO801997; 15.07.1997 AU PO798097; 15.07.1997 AU PO794297; 15.07.1997 AU PO801897; 15.07.1997 AU PO802197; 15.07.1997 AU PO800097; 15.07.1997 AU PO794097; 15.07.1997 AU PO793997; 15.07.1997 AU PO802097; 15.07.1997 AU PO798597; 15.07.1997 AU PO798797; 15.07.1997 AU PO802297; 15.07.1997 AU PO802997; 15.07.1997 AU PO802397; 15.07.1997 AU PO802897; 15.07.1997 AU PO802797; 15.07.1997 AU PO802697; 15.07.1997 AU PO798397; 15.07.1997 AU PO798697; 15.07.1997 AU PO798197; 15.07.1997 AU PO797797; 15.07.1997 AU PO793497; 15.07.1997 AU PO799097; 11.08.1997 AU PO849797; 11.08.1997 AU PO850597; 11.08.1997 AU PO849897; 11.08.1997 AU PO850497; 11.08.1997 AU PO850197; 11.08.1997 AU PO850097; 11.08.1997 AU PO850297; 11.08.1997 AU PO849997; 23.09.1997 AU PO939597; 23.09.1997 AU PO940497; 23.09.1997 AU PO939497; 23.09.1997 AU PO939697; 23.09.1997 AU PO939797; 23.09.1997 AU PO939897; 23.09.1997 AU PO939997; 23.09.1997 AU PO940097; 23.09.1997 AU PO940197; 23.09.1997 AU PO940297; 23.09.1997 AU PO940397; 23.09.1997 AU PO940597; 16.12.1997 AU PP095997; 19.01.1998 AU PP139798; 16.03.1998 AU PP237098; 16.03.1998 AU PP237198; 12.06.1998 AU PP409498
(43) Date of publication of application: 26.07.2000
(73) Proprietor: Silverbrook Research Pty. Limited, Balmain, NSW 2041 (AU)
(72) Inventor: SILVERBROOK, Kia, Leichhardt, NSW 2040 (AU); WALMSLEY, Simon, Epping, NSW 2121 (AU); LAPSTUN, Paul, Rodd Point, NSW 2046 (AU)
(74) Representative: Kinsler, Maureen Catherine
(86) International application number: PCT/AU1998/000544
(87) International publication number: WO 1999/004368

(56) References cited:
- EP-A- 0 382 044
- EP-A- 0 398 295
- EP-A- 0 678 831
- EP-A- 0 763 930
- WO-A-95/16323
- WO-A-96/32265
- WO-A-97/06958
- US-A- 4 868 676
- US-A- 4 914 452
- US-A- 4 937 676
- US-A- 5 398 131
- PATENT ABSTRACTS OF JAPAN vol. 1997, no. 09, 30 September 1997 (1997-09-30) & JP 09 116843 A (CANON INC), 2 May 1997 (1997-05-02) & US 2001/043342 A1 (SUZUKI E.) 22 November 2001 (2001-11-22)

## Description

### Field of the Invention

The present invention relates to an image processing method and apparatus and, in particular, discloses a Digital Instant Camera with Image Processing Capability.

The present invention further relates to the field of digital camera technology and, particularly, discloses a digital camera having an integral color printer.

### Background of the Invention

Traditional camera technology has for many years relied upon the provision of an optical processing system which relies on a negative of an image which is projected onto a photosensitive film which is subsequently chemically processed so as to "fix" the film and to allow for positive prints to be produced which reproduce the original image. Such an image processing technology, although it has become a standard, can be unduly complex, as expensive and difficult technologies are involved in full color processing of images. Recently, digital cameras have become available. These cameras normally rely upon the utilization of a charged coupled device (CCD) to sense a particular image. The camera normally includes storage media for the storage of the sensed scenes in addition to a connector for the transfer of images to a computer device for subsequent manipulation and printing out.

Such devices are generally inconvenient in that all images must be stored by the camera and printed out at some later stage. Hence, the camera must have sufficient storage capabilities for the storing of multiple images and, additionally, the user of the camera must have access to a subsequent computer system for the downloading of the images and printing out by a computer printer or the like.

Further, Polaroid^{™} type instant cameras have been available for some time which allow for the production of instant images. However, this type of camera has limited utility producing only limited sized images and many problems exist with the chemicals utilised and, in particular, in the aging of photographs produced from these types of cameras.

When using such devices and other image capture devices it will be desirable to be able to suitably deal with audio and other environmental information when taking a picture.

Further, the creation of stereoscopic views, with a first image being presented to the left eye and second image being presented to the right eye, thereby creating an illusion of a three dimensional surface is well known. However, previous systems have required complex preparation and high fidelity images have generally not been possible. Further, the general choice of images has been limited with the images normally only being specially prepared images.

There is a general need for being able to produce high fidelity stereoscopic images on demand and in particular for producing images by means of a portable camera device wherein the stereoscopic image can be taken at will.

Further, it would be highly convenient if such a camera picture image production system was able to create automatic customised postcards which, on a first surface contained the image captured by the camera device and, on a second surface, contains pre-paid postage marks and address details.

Recently, it has become more and more popular in respect of photographic reproduction techniques to produce longer and longer "panoramic" views of a image. These images can be produced on photographic paper or the like and the structure of the image is normally to have longer and longer lengths in comparison to the width so as to produce the more "panoramic" type views. Unfortunately, this imposes a problem where the photographic paper to be imaged upon originally was stored on a roll of small diameter.

Recently, it has become quite popular to provide filters which produce effects on images similar to popular artistic painting styles. These filters are designed to take an image and produce a resultant secondary image which appears to be an artistic rendition of the primary image in one of the artistic styles. One extremely popular artist in modem times was Vincent van Gogh. It is a characteristic of art works produced by this artist that the direction of brush strokes in flat areas of his paintings strongly follow the direction of edges of dominant features in the painting. For example, his works entitled "Road with Cypress and Star", "Starry Night" and "Portrait of Doctor Gachet" are illustrative examples of this process. It would be desirable to provide a computer algorithm which can automatically produce a "van Gogh" effect on an arbitrary input image an output it on a portable camera system..

Unfortunately, warping systems generally utilised high end computers and are generally inconvenient in that an image must be scanned into the computer processed and then printed out. This is generally inconvenient, especially where images are captured utilising a hand held camera or the like as there is a need to, at a later stage, transfer the captured images to a computer system for manipulation and to subsequently manipulate them in accordance with requirements.

Further, new and unusual effects which simulate various painting styles are often considered to be of great value. Further, if these effects can be combined into one simple form of implementation they would be suitable for incorporation into a portable camera device including digital imaging capabilities and thereby able to produce desire filtered images of scenes taken by a camera device.

Unfortunately, changing digital imaging technologies and changing filter technologies result in onerous system requirements in that cameras produced today obviously are unable to take advantages of technologies not yet available nor are they able to take advantage of filters which have not, as yet, been created or conceived.

One extremely popular form of camera technology is the traditional negative film and positive print photographs. In this case, a camera is utilized to image a scene onto a negative which is then processed so as to fix the negative. Subsequently, a set of prints is made from the negative. Further sets of prints can be instantly created at any time from the set of negatives. The prints normally having a resolution close to that of the original set of prints. Unfortunately, with digital camera devices, including those proposed by the present applicant, it would be necessary to permanently store in a digital form the photograph captured and printed out if further copies of the image were desired at a later time. This would be generally inconvenient in that, ideally, a copy of a "photograph" should merely require the initial print. Of course, alternatively, the original print may be copied utilising a high quality colour photocopying device. Unfortunately; any such device has limited copy capabilities and signal degradation will often be the result when such a form of copying is used. Obviously, more suitable forms of producing copies of camera prints are desirable.

Further, Almost any artistic painting of a scene utilises a restricted gamut in that the artist is limited in the colours produced as a result of the choice of medium in rendering the image. This restriction is itself often exploited by the artist to produce various artistic effects. Classic examples of this process include the following well known artistic works:
- Camille Pissaro "L'le Lacroix - Rouen, effect de brouillard" 1888. Museum of Art, Philadelphie
- Charles Angrand "Le Seine - L'aube" - 1889 collection du Petit Palais, Geneve
- Henri van de Velde "Crepuscule" - 1892. Rijksmuseum Kr6lier Mi111er, Otterlo
- Georges Seurat. "La cote du Bas-Butin, Honfleur" 1886 - Muse des Beaux - Arts, Tournai

It would be desirable to produce, from an arbitrary input image, an output image having similar effects or characteristics to those in the above list.

A number of creative judgements are made when any garment is created. Firstly, there is the shape and styling of the garment and additionally, there is the fabric colours and style. Often, a fashion designer will try many different alternatives and may even attempt to draw the final fashion product before creating the finished garment.

Such a process is generally unsatisfactory in providing a rapid and flexible turn around of the garments and also providing rapid opportunities judgement of the final appearance of a fashion product on a person.

A number of creative judgements are made when any garment is created. Firstly, there is the shape and styling of the garment and additionally, there is the fabric colours and style. Often, a fashion designer will try many different alternatives and may even attempt to draw the final fashion product before creating the finished garment.

Such a process is generally unsatisfactory in providing a rapid and flexible turn around of the garments and also providing rapid judgement of the final appearance of a fashion product on a person.

Binocular and telescope devices are well known. In particular, taking the example of a binocular device, the device provides for telescopic magnification of a scene so as to enhance the user's visual capabilities. Further, devices such as night glasses etc. also operate to enhance the user's visual system. Unfortunately, these systems tend to rely upon real time analog optical components and a permanent record of the viewed scene is difficult to achieve. One methodology perhaps suitable for recording a permanent copy of a scene is to attach a sensor device such as a CCD or the like so as to catch the scene and store it on a storage device for later printing out. Unfortunately, such an arrangement can be unduly cumbersome especially where it is desired to utilize the binocular system in the field in a highly portable manner.

Many forms of condensed information storage are well known. For example, in the field of computer devices, it is common to utilize magnetic disc drives which can be of a fixed or portable nature. In respect of portable discs, "Floppy Discs", "Zip Discs", and other forms of portable magnetic storage media have to achieve to date a large degree of acceptance in the market place. Another form of portable storage is the compact disc "CD" which utilizes a series of elongated pits along a spiral track which is read by a laser beam device. The utilization of CD's provides for an extremely low cost form of storage. However, the technologies involved are quite complex and the use of rewritable CD type devices is extremely limited.

Other forms of storage include magnetic cards, often utilized for credit cards or the like. These cards normally have a magnetic strip on the back for recording information which is of relevance to the card user. Recently, the convenience of magnetic cards has been extended in the form of Smart Card technology which includes incorporation of integrated circuit type devices on to the card. Unfortunately, the cost of such devices is often high and the complexity of the technology utilized can also be significant.

Traditionally silver halide camera processing systems have given rise to the well known utilisation of a "negative" for the production of multiple prints. The negative normally forms the source of the production prints and the practice has grown up for the independent care and protection of negatives for their subsequent continual utilisation.

With any form of encoding system which is to be sensed in a fault tolerant manner, there is the significant question of how best to encode the data so that it can be effectively and efficiently decoded. It is therefore desirable to provide for an effective encoding system.

### Summary of the Invention

The present invention relates to providing an alternative form of camera system which includes a digital camera with an integral color printer. Additionally, the camera provides hardware and software for the increasing of the apparent resolution of the image sensing system and the conversion of the image to a wide range of "artistic styles" and a graphic enhancement.

In accordance with the present invention, there is provided portable handheld camera, the camera forming a unit for the imaging of scenes by an area image sensor and printing the scenes directly out of said camera via an inkjet printer, comprising:
(a) at least one area image sensor for imaging a scene;
(b) a camera processor for processing said imaged scene, said camera processor having input means for programming said camera processor to apply a predetermined scene transformation requirement;
(c) an inkjet printer for printing out said processed image scene on print media (1009); and
(d) a print roll detachable from said camera for storing the print media inside the camera, characterized in that the print roll further stores inkjet ink for the printer.

The print roll may include an authentication chip containing authentication information and the camera processing means is adapted to interrogate the authentication chip so as to determine the authenticity of said print roll when inserted within said camera system.

Further, the printer may include a drop on demand ink printer and guillotine means for the separation of printed photographs.

### Brief Description of the Drawings

Notwithstanding any other forms which may fall within the scope of the present invention, preferred forms of the invention will now be described, by way of example only, with reference to the accompanying drawings in which:
Fig. I illustrates an Artcam device constructed in accordance with the preferred embodiment.
Fig. 2 is a schematic block diagram of the main Artcam electronic components.
Fig. 3 is a schematic block diagram of the Artcam Central Processor.
Fig. 4 illustrates a perspective view of the print roll and print head.
Fig. 5 illustrates a first exploded perspective view of the print roll.
Fig. 6 illustrates a second exploded perspective view of the print roll.
Fig. 7 illustrates a perspective view, partly in section, of an alternative form of printroll.
Fig. 8 is a left side exploded perspective view of the print roll of Fig. 7.
Fig. 9 is a right side exploded perspective view of a single printroll.
Fig. 10 is an exploded perspective view, partly in section, of the core portion of the printroll.
Fig. 11 is a second exploded perspective view of the core portion of the printroll.

### Description of Preferred and Other Embodiments

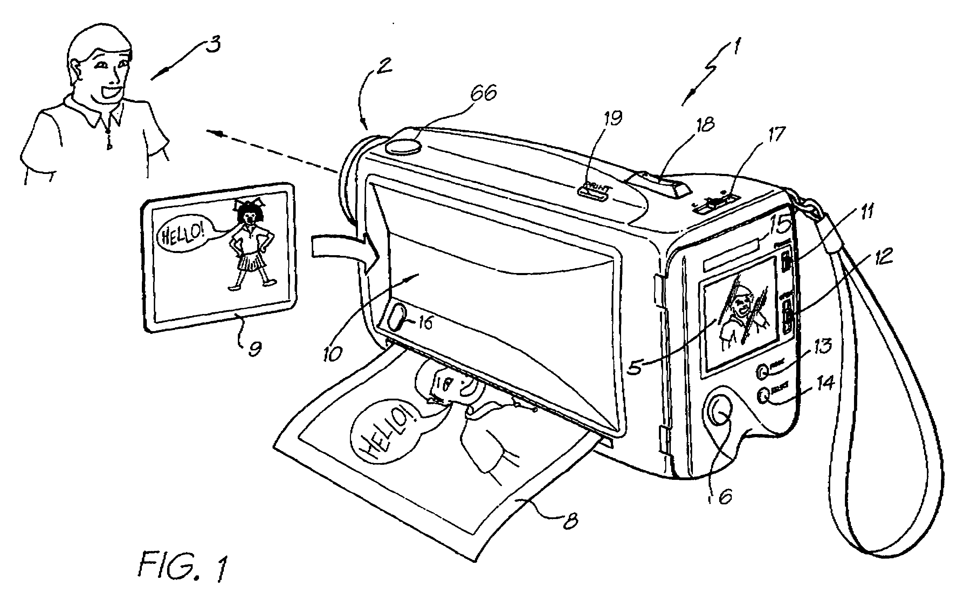

The digital image processing camera system constructed in accordance with the preferred embodiment is as illustrated in Fig. 1. The camera unit includes means for the insertion of an integral print roll (not shown). The camera unit 1 includes an area image sensor 2 which sensors an image 3 captured by the camera. Optionally, a second area image sensor can be provided to also image the scene 3 and to optionally provide for the production of stereographic output effects.

The camera 1 can include an optional color display 5 for the display of the image being sensed by the sensor 2. When a simple image is being displayed on the display 5, the button 6 can be depressed resulting in the printed image 8 being output by the camera unit 1. A series of cards, herein after known as "Artcards" 9 contain, on one surface encoded information and on the other surface, contain an image distorted by the particular effect produced by the Artcard 9. The Artcard 9 is inserted in an Artcard reader 10 in the side of camera 1 and, upon insertion, results in output image 8 being distorted in the same manner as the distortion appearing on the surface of Artcard 9. Hence, by means of this simple user interface a user wishing to produce a particular effect can insert one of many Artcards 9 into the Artcard reader 10 and utilize button 19 to take a picture of the image 3 resulting in a corresponding distorted output image 8.

The camera unit 1 can also include a number of other control buttons 13, 14 in addition to a simple LCD output display 15 for the display of informative information including the number of printouts left on the internal print roll on the camera unit. Additionally, different output formats can be controlled by CHP switch 17.

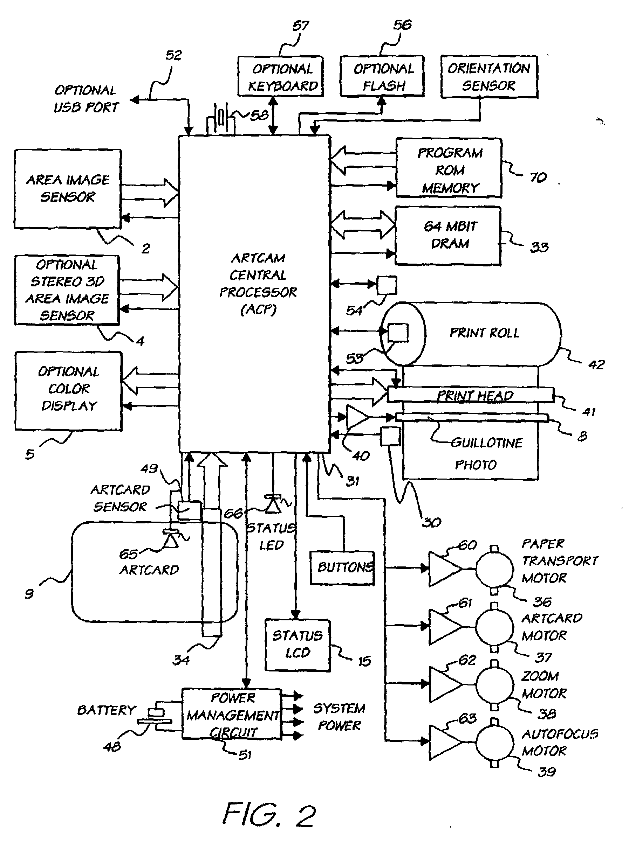

Turning now to Fig. 2, there is illustrated a schematic view of the internal hardware of the camera unit 1. The internal hardware is based around an Artcam central processor unit (ACP) 31.

### Artcam Central Processor 31

The Artcam central processor 31 provides many functions which form the 'heart' of the system. The ACP 31 is preferably implemented as a complex, high speed, CMOS system on-a-chip. Utilising standard cell design with some full custom regions is recommended. Fabrication on a 0.25pm CMOS process will provide the density and speed required, along with a reasonably small die area.

The functions provided by the ACP 31 include:
1. Control and digitization of the area image sensor 2. A 3D stereoscopic version of the ACP requires two area image sensor interfaces with a second optional image sensor 4 being provided for stereoscopic effects.
2. Area image sensor compensation, reformatting, and image enhancement.
3. Memory interface and management to a memory store 33.
4. Interface, control, and analog to digital conversion of an Artcard reader linear image sensor 34 which is provided for the reading of data from the Artcards 9.
5. Extraction of the raw Artcard data from the digitized and encoded Artcard image.
6. Reed-Solomon error detection and correction of the Artcard encoded data. The encoded surface of the Artcard 9 includes information on how to process an image to produce the effects displayed on the image distorted surface of the Artcard 9. This information is in the form of a script, hereinafter known as a "Vark script". The Vark script is utilised by an interpreter running within the ACP 31 to produce the desired effect.
7. Interpretation of the Vark script on the Artcard 9.
8. Performing image processing operations as specified by the Vark script.
9. Controlling various motors for the paper transport 36, zoom lens 38, autofocus 39 and Artcard driver 37.
10. Controlling a guillotine actuator 40 for the operation of a guillotine 41 for the cutting of photographs 8 from print roll 42.
11. Half-toning of the image data for printing.
12. Providing the print data to a print-head 44 at the appropriate times.
13. Controlling the print head 44.
14. Controlling the ink pressure feed to print-head 44.
15. Controlling optional flash unit 56.
16. Reading and acting on various sensors in the camera, including camera orientation sensor 46, autofocus 47 and Artcard insertion sensor 49.
17. Reading and acting on the user interface buttons 6, 13, 14.
18. Controlling the status display 15.
19. Providing viewfinder and preview images to the color display 5.
20. Control of the system power consumption, including the ACP power consumption via power management circuit 51
21. Providing external communications 52 to general purpose computers (using part USB).
22. Reading and storing information in a printing roll authentication chip 53.
23. Reading and storing information in a camera authentication chip 54.
24. Communicating with an optional mini-keyboard 57 for text modification.

### Quartz crystal 58

A quartz crystal 58 is used as a frequency reference for the system clock. As the system clock is very high, the ACP 31 includes a phase locked loop clock circuit to increase the frequency derived from the crystal 58.

### Image Sensing

### Area image sensor 2

The area image sensor 2 converts an image through its lens into an electrical signal. It can either be a charge coupled device (CCD) or an active pixel sensor (APS) CMOS image sector. At present, available CCD's normally have a higher image quality, however, there is currently much development occurring in CMOS imagers. CMOS imagers are eventually expected to be substantially cheaper than CCD's have smaller pixel areas, and be able to incorporate drive circuitry and signal processing. They can also be made in CMOS fabs, which are transitioning to 12" wafers. CCD's are usually built in 6" wafer fabs, and economics may not allow a conversion to 12" fabs. Therefore, the difference in fabrication cost between CCD's and CMOS imagers is likely to increase, progressively favoring CMOS imagers. However, at present, a CCD is probably the best option.

The Artcam unit will produce suitable results with a 1,500 x 1 ,000 area image sensor. However, smaller sensors, such as 750 x 500, will be adequate for many markets. The Artcam is less sensitive to image sensor resolution than are conventional digital cameras. This is because many of the styles contained on Artcards 9 process the image in such a way as to obscure the lack of resolution. For example, if the image is distorted to simulate the effect of being converted to an impressionistic painting, low source image resolution can be used with minimal effect. Further examples for which low resolution input images will typically not be noticed include image warps which produce high distorted images, multiple miniature copies of the of the image (eg. passport photos), textural processing such as bump mapping for a base relief metal look, and photo-compositing into structured scenes.

This tolerance of low resolution image sensors may be a significant factor in reducing the manufacturing cost of an Artcam unit 1 camera. An Artcam with a low cost 750 x 500 image sensor will often produce superior results to a conventional digital camera with a much more expensive 1,500 x 1,000 image sensor.

### Optional stereoscopic 3D image sensor 4

The 3D versions of the Artcam unit I have an additional image sensor 4, for stereoscopic operation. This image sensor is identical to the main image sensor. The circuitry to drive the optional image sensor may be included as a standard part of the ACP chip 31 to reduce incremental design cost. Alternatively, a separate 3D Artcam ACP can be designed. This option will reduce the manufacturing cost of a mainstream single sensor Artcam.

### Print roll authentication chip 53

A small chip 53 is included in each print roll 42. This chip replaced the functions of the bar code, optical sensor and wheel, and ISO/ASA sensor on other forms of camera film units such as Advanced Photo Systems film cartridges.

The authentication chip also provides other features:
1. The storage of data rather than that which is mechanically and optically sensed from APS rolls
2. A remaining media length indication, accurate to high resolution.
3. Authentication Information to prevent inferior clone print roll copies. , ,

The authentication chip 53 contains 1024 bits of Flash memory, of which 128 bits is an authentication key, and 512 bits is the authentication information. Also included is an encryption circuit to ensure that the authentication key cannot be accessed directly.

### Print-head 44

The Artcam unit 1 can utilize any color ink jet print technology which is small enough, low enough power, fast enough, high enough quality, and low enough cost, and is compatible with the print roll. Relevant printheads will be specifically discussed hereinafter.

The specifications of the ink jet head are:

| Image type | Bi-level, dithered |
|---|---|
| Color | CMY Process Color |
| Resolution | 1600 dpi |
| Print head length | 'Page-width' (100 mm) |
| Print speed | 2 seconds per photo |

### Optional ink pressure Controller (not shown)

The function of the ink pressure controller depends upon the type of ink jet print head 44 incorporated in the Artcam. For some types of ink jet, the use of an ink pressure controller can be eliminated, as the ink pressure is simply atmospheric pressure. Other types of print head require a regulated positive ink pressure. In this case, the in pressure controller consists of a pump and pressure transducer.

Other print heads may require an ultrasonic transducer to cause regular oscillations in the ink pressure, typically at frequencies around 100KHz. In the case, the ACP 31 controls the frequency phase and amplitude of these oscillations.

### Paper transport motor 36

The paper transport motor 36 moves the paper from within the print roll 42 past the print head at a relatively constant rate. The motor 36 is a miniature motor geared down to an appropriate speed to drive rollers which move the paper. A high quality motor and mechanical gears are required to achieve high image quality, as mechanical rumble or other vibrations will affect the printed dot row spacing.

### Paper transport motor driver 60

The motor driver 60 is a small circuit which amplifies the digital motor control signals from the APC 31 to levels suitable for driving the motor 36.

### Paper pull sensor

A paper pull sensor 50 detects a user's attempt to pull a photo from the camera unit during the printing process. The APC 31 reads this sensor 50, and activates the guillotine 41 if the condition occurs. The paper pull sensor 50 is incorporated to make the camera more foolproof in operation. Were the user to pull the paper out forcefully during printing, the print mechanism 44 or print roll 42 may (in extreme cases) be damaged. Since it is acceptable to pull out the 'pod' from a Polaroid type camera before it is fully y ejected, the public has been 'trained' to do this. Therefore, they are unlikely to heed printed instructions not to pull the paper.

The Artcam preferably restarts the photo print process after the guillotine 41 has cut the paper after pull sensing.

The pull sensor can be implemented as a strain gauge sensor, or as an optical sensor detecting a small plastic flag which is deflected by the torque that occurs on the paper drive rollers when the paper is pulled. The latter implementation is recommendation for low cost.

### Paper guillotine actuator 40

The paper guillotine actuator 40 is a small actuator which causes the guillotine 41 to cut the paper either at the end of a photograph, or when the paper pull sensor 50 is activated.

The guillotine actuator 40 is a small circuit which amplifies a guillotine control signal from the APC tot the level required by the actuator 41.

### Camera authentication chip

The camera authentication chip 54 is identical to the print foil authentication chip 53, except that it has different information stored in it. The camera authentication chip 54 has three main purposes:
1. To provide a secure means of comparing authentication codes with the print roll authentication chip;
2. To provide storage for manufacturing information, such as the serial number of the camera;
3. To provide a small amount of non-volatile memory for storage of user information.

### Displays

The Artcam includes an optional color display 5 and small status display 15. Lowest cost consumer cameras may include a color image display, such as a small TFT LCD 5 similar to those found on some digital cameras and camcorders. The color display 5 is a major cost element of these versions of Artcam, and the display 5 plus back light are a major power consumption drain.

### Status display 15

The status display 15 is a small passive segment based LCD, similar to those currently provided on silver halide and digital cameras. Its main function is to show the number of prints remaining in the print roll 42 and icons for various standard camera features, such as flash and battery status.

### Color display 5

The color display 5 is a full motion image display which operates as a viewfinder, as a verification of the image to be printed, and as a user interface display. The cost of the display 5 is approximately proportional to its area, so large displays (say 4" diagonal) unit will be restricted to expensive versions of the Artcam unit. Smaller displays, such as color camcorder viewfinder TFT's at around 1", may be effective for mid-range Artcams.

### Zoom lens (not shown)

The Artcam can include a zoom lens. This can be a standard electronically controlled zoom lens, identical to one which Would,be used on a standard electronic camera, and similar to pocket camera zoom lenses. A referred version of the Artcam unit may include standard interchangeable 35mm SLR lenses.

### Autofocus motor 39

The autofocus motor 39 changes the focus of the zoom lens. The motor is a miniature motor geared down to an appropriate speed to drive the autofocus mechanism.

### Autofocus motor driver 63

The autofocus motor driver 63 is a small circuit which amplifies the digital motor control signals from the APC 31 to levels suitable for driving the motor 39.

### Zoom motor 38

The zoom motor 38 moves the zoom front lenses in and out. The motor is a miniature motor geared down t keyboard.

### Power Supply

The Artcam unit uses a battery 48. Depending upon the Artcam options, this is either a 3V Lithium cell, 1.5V AA alkaline cells, or other battery arrangement.

### Power Management Unit 51

Power consumption is an important design constraint in the Artcam. It is desirable that either standard camera batteries (such as 3V lithium batters) or standard AA or AAA alkaline cells can be used. While the electronic complexity of the Artcam unit is dramatically higher than 35mm photographic cameras, the power consumption need not be commensurately higher. Power in the Artcam can be carefully managed with all unit being turned off when not in use.

The most significant current drains are the ACP 31, the area image sensors 2,4, the printer 44 various motors, the flash unit 56, and the optional color display 5 dealing with each part separately:
1. ACP: If fabricated using 0.25µm CMOS, and running on 1.5V, the ACP power consumption can be quite low. Clocks to various parts of the ACP chip can be quite low. Clocks to various parts of the ACP chip can be turned off when not in use, virtually eliminating standby current consumption. The ACP will only fully used for approximately 4 seconds for each photograph printed.
2. Area image sensor: power is only supplied to the area image sensor when the user has their finger on the button.
3. The printer power is only supplied to the printer when actually printing. This is for around 2 seconds for each photograph. Even so, suitably lower power consumption printing should be used.
4. The motors required in the Artcam are all low power miniature motors, and are typically only activated for a few seconds per photo.
5. The flash unit 45 is only used for some photographs. Its power consumption can readily be provided by a 3V lithium battery for a reasonably battery life.
6. The optional color display 5 is a major current drain for two reasons: it must be on for the whole time that the camera is in use, and a backlight will be required if a liquid crystal display is used. Cameras which incorporate a color display will require a larger battery to achieve acceptable batter life.

### Flash unit 56

The flash unit 56 can be a standard miniature electronic flash for consumer cameras.

### Overview of the ACP 31

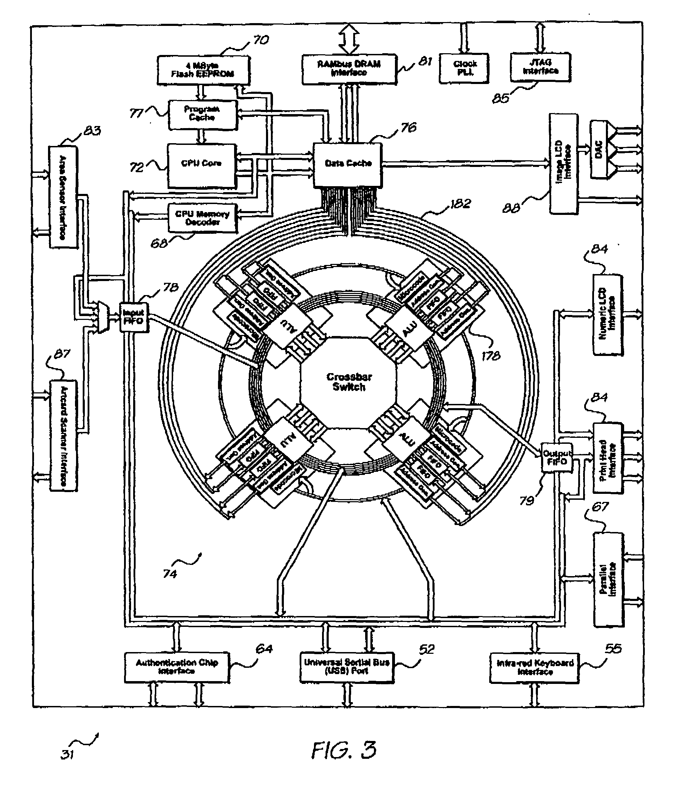

Fig. 3 illustrates the Artcam Central Processor (ACP) 31 in more detail. The Artcam Central Processor provides all of the processing power for Artcam. It is designed for a 0.25 micron CMOS process, with approximately 1.5 million transistors and an area of around 50 mm². The ACP 31 is a complex design, but design effort can be reduced by the use of datapath compilation techniques, macrocells, and IP cores. The ACP 31 contains:
A RISC CPU core 72
A 4 way parallel VLIW Vector Processor 74
A Direct RAMbus interface 81
A CMOS image sensor interface 83
A CMOS linear image sensor interface 88
A USB serial interface 52
An infrared keyboard interface 55
A numeric LCD interface 84, and
A color TFT LCD interface 88
A 4Mbyte Flash memory 70 for program storage 70
The RISC CPU, Direct RAMbus interface 81, CMOS sensor interface 83 and USB serial interface 52 can be vendor supplied cores. The ACP 31 is intended to run at a clock speed of 200 MHz on 3V externally and 1.5V internally to minimize power consumption. The CPU core needs only to run at 100 MHz.

### Image Access

The DRAM Interface 81 is responsible for interfacing between other client portions of the ACP chip and the RAMBUS DRAM. In effect, each module within the DRAM Interface is an address generator.

There are three logical types of images manipulated by the ACP. They are:
- CCD Image, which is the Input Image captured from the CCD.
- Internal Image format - the Image format utilised internally by the Artcam device.
- Print Image - the Output Image format printed by the Artcam

These images are typically different in color space, resolution, and the output & input color spaces which can vary from camera to camera. For example, a CCD image on a low-end camera may be a different resolution, or have different color characteristics from that used in a high-end camera. However all internal image formats are the same format in terms of color space across all cameras.

In addition, the three image types can vary with respect to which direction is 'up'. The physical orientation of the camera causes the notion of a portrait or landscape image, and this must be maintained throughout processing. For this reason, the internal image is always oriented correctly, and rotation is performed on images obtained from the CCD and during the print operation.

### Print Rolls

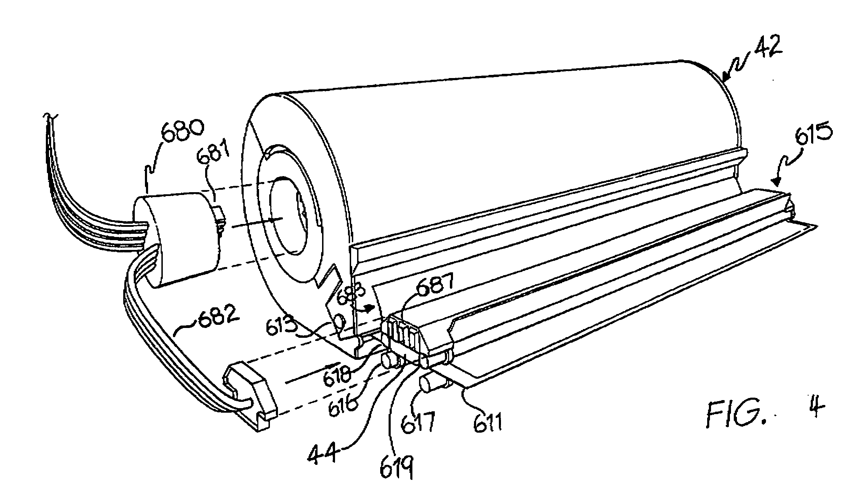

Turning to Fig. 4, there is illustrated the print roll 42 and print-head portions of the Artcam. The paper/film 611 is fed in a continuous "web-like" process to a printing mechanism 15 which includes further pinch rollers 616 - 619 and a print head 44

The pinch roller 613 is connected to a drive mechanism (not shown) and upon rotation of the print roller 613, "paper" in the form of film 611 is forced through the printing mechanism 615 and out of the picture output slot 6. A rotary guillotine mechanism (not shown) is utilised to cut the roll of paper 611 at required photo sizes.

It is therefore evident that the printer roll 42 is responsible for supplying "paper" 611 to the print mechanism 615 for printing of photographically imaged pictures.

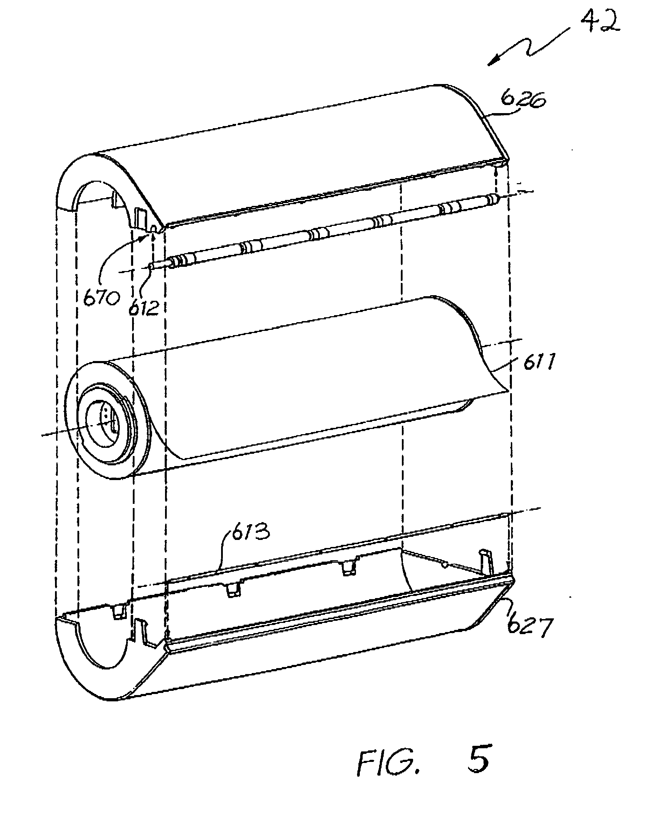

In Fig. 5, there is shown an exploded perspective of the print roll 42. The printer roll 42 includes output printer paper 611 which is output under the operation of pinching rollers 612,613.

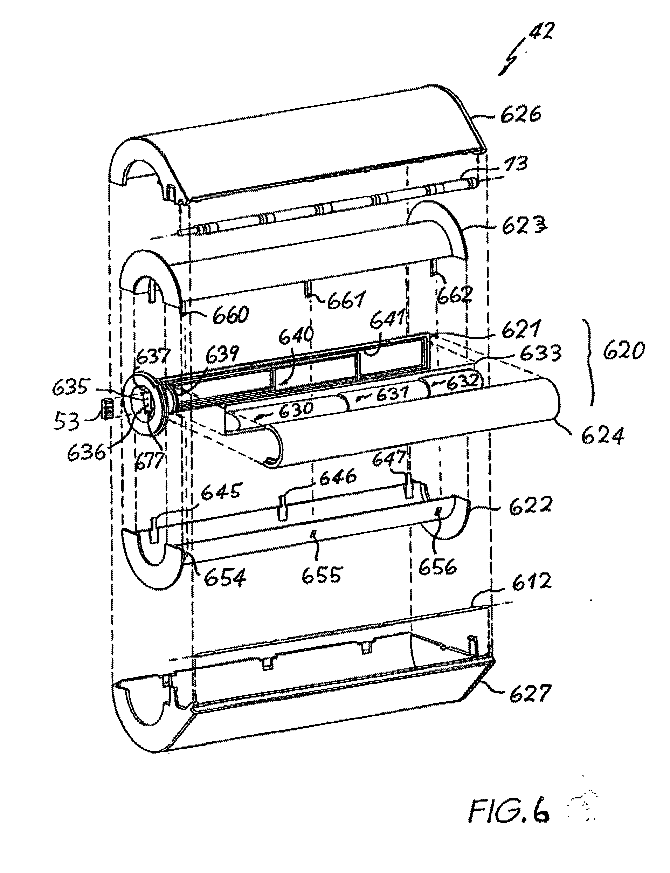

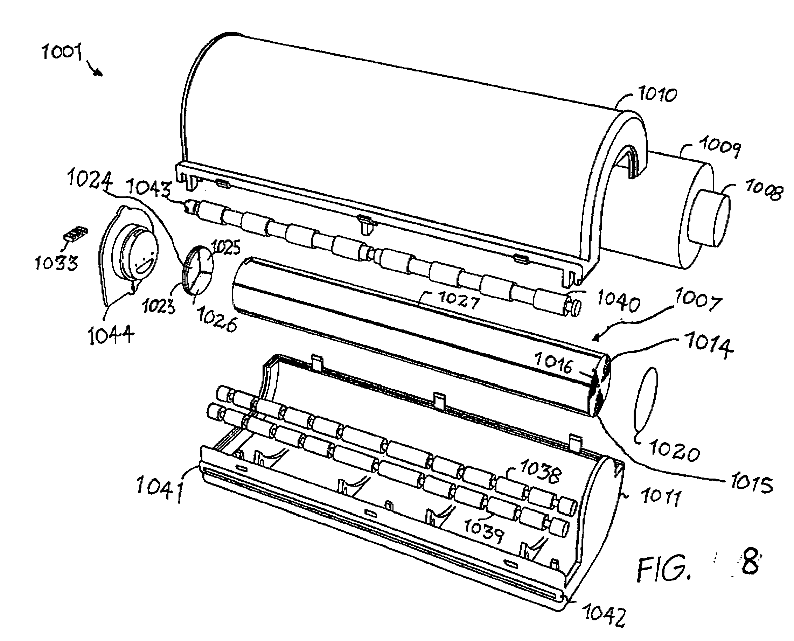

Referring now to Fig. 6, there is illustrated a more fully exploded perspective view, of the print roll 42 of Fig. 8 without the "paper" film roll. The print roll 42 includes three main parts comprising ink reservoir section 620, paper roll sections 622, 623 and outer casing sections 626, 627.

Turning first to the ink reservoir section 620, which includes the ink reservoir or ink supply sections 633. The ink for printing is contained within three bladder type containers 630 - 632. The printer roll 42 is assumed to provide full color output inks. Hence, a first ink reservoir or bladder container 630 contains cyan colored ink. A second reservoir 631 contains magenta colored ink and a third reservoir 632 contains yellow ink. Each of the reservoirs 630 - 632, although having different volumetric dimensions, are designed to have substantially the same volumetric size.

The ink reservoir sections 621, 633, in addition to cover 624 can be made of plastic sections and are designed to be mated together by means of heat sealing, ultra violet radiation, etc. Each of the equally sized ink reservoirs 630 - 632 is connected to a corresponding ink channel 639 - 641 for allowing the flow of ink from the reservoir 630 - 632 to a corresponding ink output port 635 - 637. The ink reservoir 632 having ink channel 641, and output port 637, the ink reservoir 631 having ink channel 640 and output port 636, and the ink reservoir 630 having ink channel 639 and output port 637.

In operation, the ink reservoirs 630 - 632 can be filled with corresponding ink and the section 633 3 joined to the section 621. The ink reservoir sections 630 - 632, being collapsible bladders, allow for ink to traverse ink channels 639 - 641 and therefore be in fluid communication with the ink output ports 635 - 637. Further, if required, an air inlet port can also be provided to allow the pressure associated with ink channel reservoirs 630 - 632 to be maintained as required.

The cap 624 can be joined to the ink reservoir section 620 so as to form a pressurized cavity, accessible by the air pressure inlet port.

The ink reservoir sections 621, 633 and 624 are designed to be connected together as an integral unit and to be inserted inside printer roll sections622, 623. The printer roll sections 622, 623 are designed to mate together by means of a snap fit by means of male portions 645 - 647 mating with corresponding female portions (not shown). Similarly, female portions 654 - 656 are designed to mate with corresponding male portions 660 - 662. The paper roll sections 622, 623 are therefore designed to be snapped together. One end of the film within the role is pinched between the two sections 622, 623 when they are joined together. The print film can then be rolled on the print roll sections 622, 625 as required.

As noted previously, the ink reservoir sections 620, 621, 633, 624 are designed to be inserted inside the paper roll sections 622, 623. The printer roll sections 622, 623 are able to be rotatable around stationery ink reservoir sections 621, 633 and 624 to dispense film on demand.

The outer casing sections 626 and 627 are further designed to be coupled around the print roller sections 622, 623. In addition to each end of pinch rollers eg 612, 613 is designed to clip in to a corresponding cavity eg 670 in cover 626, 627 with roller 613 being driven externally (not shown) to feed the print film out of the print roll.

Finally, a cavity 677 can be provided in the ink reservoir sections 620, 621 for the insertion and gluing of a silicon chip integrated circuit type device 53 for the storage of information associated with the print roll 42.

As shown in Fig. 4 and Fig. 6, the print roll 42 is designed to be inserted into the Artcam camera device so as to couple with a coupling unit 680 which includes connector pads 681 for providing a connection with the silicon chip 53. Further, the connector 680 includes end connectors of four connecting with ink supply ports 635 - 637. The ink supply ports are in turn to connect to ink supply lines eg 682 which are in turn interconnected to printheads supply ports eg. 687 for the flow of ink to print-head 44 in accordance with requirements.

The "media" 611 utilised to form the roll can comprise many different materials on which it is designed to print suitable images. For example, opaque rollable plastic material may be utilized, transparencies may be used by using transparent plastic sheets, metallic printing can take place via utilization of a metallic sheet film- Further, fabrics could be utilised within the printer roll 42 for printing images on fabric, although care must be taken that only fabrics having a suitable stiffness or suitable backing material are utilised.

When the print media is plastic, it can be coated with a layer which fixes and absorbs the ink. Further, several types of print media may be used, for example, opaque white matte, opaque white gloss, transparent film, frosted transparent film, lenticular array film for stereoscopic 3D prints, metallised film, film with the embossed optical variable devices such as gratings or holograms, media which is pre-printed on the reverse side, and media which includes a magnetic recording layer. When utilising a metallic foil, the metallic foil can have a polymer base, coated with a thin (several micron) evaporated layer of aluminum or other metal and then coated with a clear protective layer adapted to receive the ink via the ink printer mechanism.

In use the print roll 42 is obviously designed to be inserted inside a camera device so as to provide ink and paper for the printing of images on demand. The ink output ports 635 - 637 meet with corresponding ports within the camera device and the pinch rollers 672, 673 are operated to allow the supply of paper to the camera device under the control of the camera device,

### Alternative Print Roll

In an alternative embodiment, there is provided a modified form of print roll which can be constructed mostly from injection moulded plastic pieces suitably snapped fitted together. The modified form of print roll has a high ink storage capacity in addition to a somewhat simplified construction. The print media onto which the image is to be printed is wrapped around a plastic sleeve former for simplified construction. The ink media reservoir has a series of air vents which are constructed so as to minimise the opportunities for the ink flow out of the air vents. Further, a rubber seal is provided for the ink outlet holes with the rubber seal being pierced on insertion of the print roll into a camera system. Further, the print roll includes a print media ejection slot and the ejection slot includes a surrounding moulded surface which provides and assists in the accurate positioning of the print media ejection slot relative to the printhead within the printing or camera system.

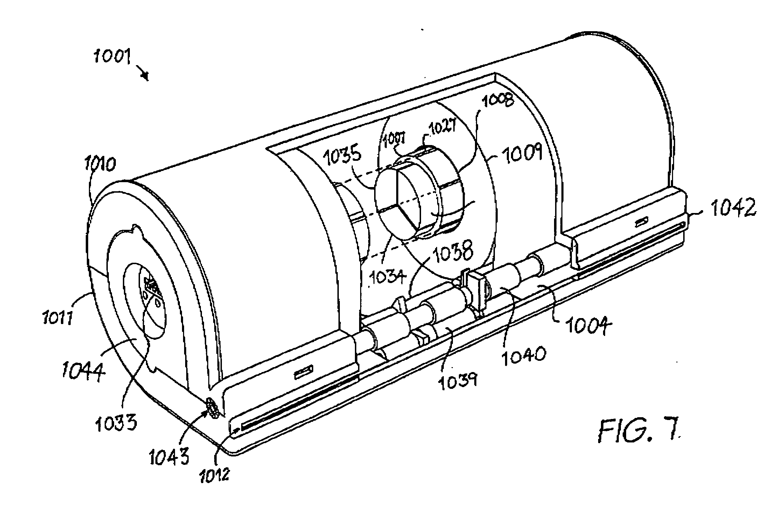

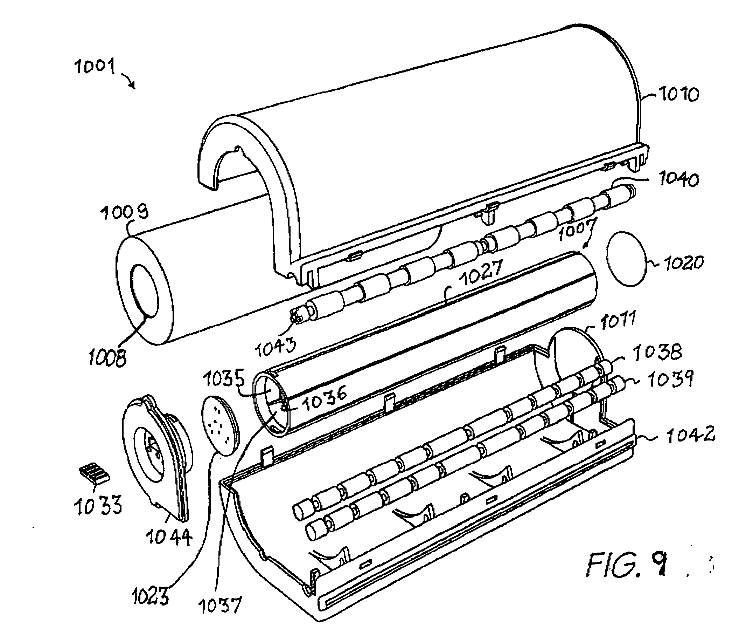

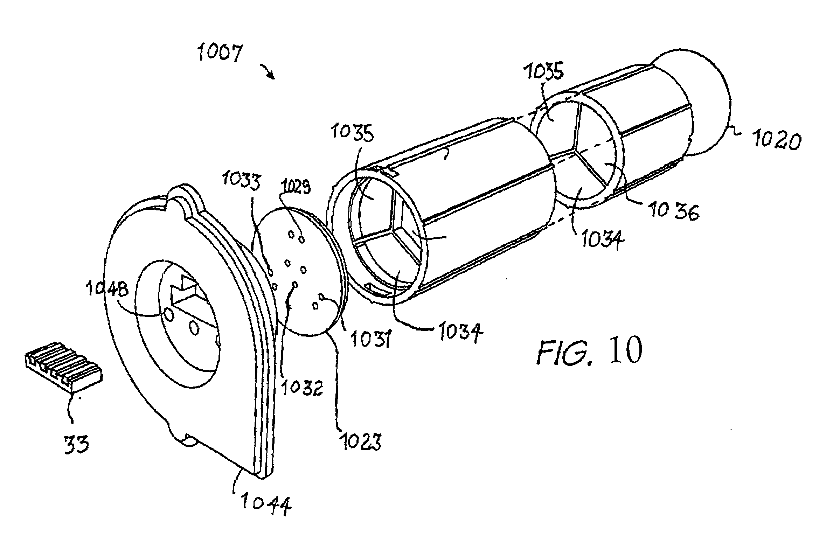

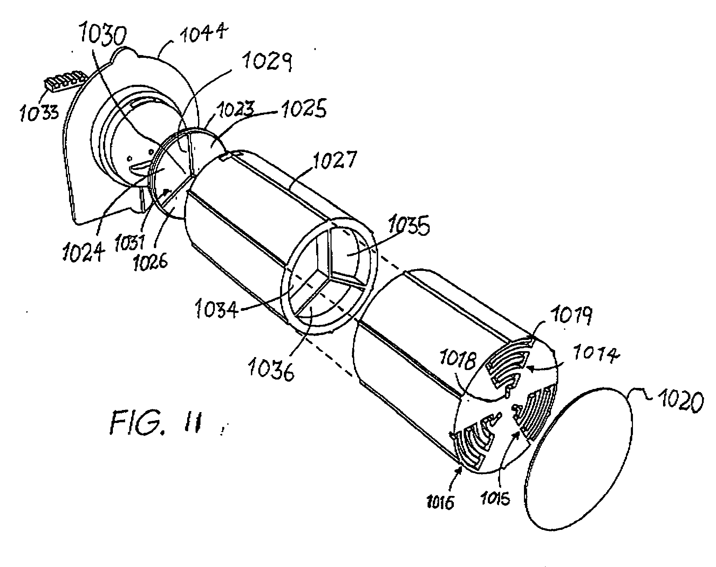

Turning to Fig. 7 to Fig. 11, in Fig. 7 there is illustrated a single point roll unit 1001 in an assembled form with a partial cutaway showing internal portions of the printroll. Fig. 8 and Fig. 9 illustrate left and right side exploded perspective views respectively. Fig. 10 and Fig. 11 are exploded perspective's of the internal core portion 1007 of Fig. 7 to Fig. 9.

The print roll 1001 is constructed around the internal core portion 1007 which contains an internal ink supply. Outside of the core portion 1007 is provided a former 1008 around which is wrapped a paper or film supply 1009. Around the paper supply it is constructed two cover pieces 1010, 1011 which snap together around the print roll so as to form a covering unit as illustrated in Fig. 10. The bottom cover piece 1011 includes a slot 1012 through which the output of the print media 1004 for interconnection with the camera system.

Two pinch rollers 1038, 1039 are provided to pinch the paper against a drive pinch roller 1040 so they together provide for a decurling of the paper around the roller 1040. The decurling acts to negate the strong curl that may be imparted to the paper from being stored in the form of print roll for an extended period of time. The rollers 1038, 1039 are provided to form a snap fit with end portions of the cover base portion 1077 and the roller 1040 which includes a cogged end 1043 for driving, snap fits into the upper cover piece 1010 so as to pinch the paper 1004 firmly between.

The cover pieces 1011 includes an end protuberance or lip 1042. The end lip 1042 is provided for accurately alignment of the exit hole of the paper with a corresponding printing heat platen structure within the camera system. In this way, accurate alignment or positioning of the exiting paper relative to an adjacent printhead is provided for full guidance of the paper to the printhead.

Turning now to Fig. 10 and Fig. 11, there is illustrated exploded perspectives of the internal core portion which can be formed from an injection moulded part and is based around 3 core ink cylinders having internal sponge portions 1034-1036.

At one end of the core portion there is provided a series of air breathing channels eg. 1014 - 1016. Each air breathing channel 1014 - 1016 interconnects a first hole eg. 1018 with an external contact point 1019 which is interconnected to the ambient atmosphere. The path followed by the air breathing channel eg. 1014 is preferably of a winding nature, winding back and forth. The air breathing channel is sealed by a portion of sealing tape 1020 which is placed over the end of the core portion. The surface of the sealing tape 1020 is preferably hydrophobically treated to make it highly hydrophobic and to therefore resist the entry of any fluid portions into the air breathing channels.

At a second end of the core portion 1007 there is provided a rubber sealing cap 1023 which includes three thickened portions 1024, 1025 and 1026 with each thickened portion having a series of thinned holes. For example, the portion 1024 has thinned holes 1029, 1030 and 1031. The thinned holes are arranged such that one hole from each of the separate thickened portions is arranged in a single line. For example, the thinned holes 1031, 1032 and 1033 (Fig. 13) are all arranged in a single line with each hole coming from a different thinned portion. Each of the thickened portions corresponds to a corresponding ink supply reservoir such that when the three holes are pierced, fluid communication is made with a corresponding reservoir.

An end cap unit 1044 is provided for attachment to the core portion 1007. The end cap 1044 includes an aperture 1046 for the insertion of an authentication chip 1033 in addition to a pronged adaptor (not shown) which includes three prongs which are inserted through corresponding holes (e.g., 1048), piercing a thinned portion (e.g., 1033) of seal 1023 and interconnecting to a corresponding ink chamber (e.g., 1035).

Also inserted in the end portion 1044 is an authentication chip 1033, the authentication chip being provided to authenticate access of the print roll to the camera system. This core portion is therefore divided into three separate chambers with each containing a separate color of ink and internal sponge. Each chamber includes an ink outlet in a first end and an air breathing hole in the second end. A cover of the sealing tape 1020 is provided for covering the air breathing channels and the rubber seal 1023 is provided for sealing the second end of the ink chamber.

The internal ink chamber sponges and the hydrophobic channel allow the print roll to be utilized in a mobile environment and with many different orientations. Further, the sponge can itself be hydrophobically treated so as to force the ink out of the core portion in an orderly manner.

A series of ribs (e.g., 1027) can be provided on the surface of the core portion so as to allow for minimal frictional contact between the core portion 1007 and the printroll former 1008.

Most of the portions of the print roll can be constructed from ejection moulded plastic and the print roll includes a high internal ink storage capacity. The simplified construction also includes a paper decurling mechanism in addition to ink chamber air vents which provide for minimal leaking. The rubber seal provides for effective communication with an ink supply chambers so as to provide for high operational capabilities.

## Claims

1. A portable handheld camera (1), the camera forming a unit for the imaging of scenes by an area image sensor (2) and printing the scenes directly out of said camera via an inkjet printer (44), comprising:
(a) at least one area image sensor (2) for imaging a scene;
(b) a camera processor (31) for processing said imaged scene, said camera processor having input means for programming said camera processor to apply a predetermined scene transformation requirement;
(c) a printer (44) for printing out said processed image scene on print media (1009); and
(d) a print roll (1001) detachable from said camera (1) for storing the print media (1009) inside the camera, **characterized in that** the printer (44) is an inkjet printer and that the print roll (1001) further stores inkjet ink for the printer.

2. A portable handheld camera as claimed in claim 1, further comprising a guillotine means (40) for the separation of printed scenes (8).

## Patentansprüche

1. Als Handgerät tragbare Kamera (1), wobei die Kamera eine Einheit bildet für das Abbilden von Szenen durch einen Bereichsabbildungssensor (2) und das Ausdrucken der Szenen direkt aus der Kamera über einen Tintenstrahldrucker (44), wobei die Kamera aufweist:
a) zumindest einen Bereichsabbildungssensor (2) für das Abbilden einer Szene;
b) einen Kameraprozessor (31) für das Weiterverarbeiten der abgebildeten Szene, wobei der Kameraprozessor Eingabemittel für das Programmieren des Kameraprozessors aufweist, um ein vorbestimmtes Szenentransformations-Erfordernis anzuwenden;
c) einen Drucker (44) um die weiterverarbeitete Bildszene auf ein Druckmedium (1009) auszudrucken; und
d) eine Druckrolle (1001), die von der Kamera (1) loslösbar ist, für das Verwahren des Druckmediums (1009) in der Kamera, **dadurch gekennzeichnet, dass** der Drucker (44) ein Tintenstrahldrucker ist, und dass die Druckrolle (1001) weiters Tintenstrahl-Tinte für den Drucker aufbewahrt.

2. Als Handgerät tragbare Kamera nach Anspruch 1, welche weiters ein Abschneidemittel (40) zur Abtrennung der gedruckten Szenen (8) aufweist.

## Revendications

1. Appareil photographique portable à main (1), l'appareil photographique formant une unité destinée à représenter par une image des scènes au moyen d'un détecteur mosaïque bidimensionnel (2) et imprimant les scènes directement par une imprimante à jet d'encre (44) en dehors dudit appareil photographique, comprenant :
(a) au moins un détecteur mosaïque bidimensionnel (2) pour représenter une scène par une image ;
(b) un processeur d'appareil photographique (31) pour traiter ladite scène représentée par une image, ledit processeur d'appareil photographique présentant un moyen d'entrée pour programmer ledit processeur d'appareil photographique afin d'appliquer une exigence prédéterminée de transformation de scène.
(c) une imprimante (44) pour imprimer ladite scène d'image traitée sur un support d'impression (1009) ; et
(d) un rouleau d'impression (1001) détachable dudit appareil photographique (1) pour stocker le support d'impression (1009) à l'intérieur de l'appareil photographique, **caractérisé en ce que** l'imprimante (44) est une imprimante à jet d'encre et **en ce que** le rouleau d'impression (1001) stocke en outre l'encre de jet d'encre pour l'imprimante.

2. Appareil photographique portable à main selon la revendication 1, comprenant en outre un moyen formant coupeuse (40) afin de séparer des scènes (8) imprimées.
